# EUROPEAN PATENT APPLICATION

(11) **EP 1 821 493 A2**
(43) Date of publication of application: **22.08.2007**
(21) Application number: 07102163.8
(22) Date of filing: 12.02.2007
(51) Int. Cl.: H04L 29/06, G06F 21/00

(54) **Method and apparatus for using DRM content while roaming**

(30) Priority: 15.02.2006 KR 20060014762
(71) Applicant: Samsung Electronics Co., Ltd., Suwon-si 442-742 Gyeonggi-Do (KR)
(72) Inventor: Lee, Jae-won, Suji-gu, Yongin-si, Gyeonggi-do (KR); Chae, Seung-chul, Yeongtong-gu, Gyeonggi-do (KR); Jung-Kyung-im, Bundang-gu, Seongnam-si, Gyeonggi-do (KR); Jang, Young-suk, Uijeongbu-si, Gyeonggi-do (KR)
(74) Representative: Robinson, Ian Michael

(57) **Abstract**

A method of using digital rights management (DRM) content while roaming is provided. The method includes issuing disposable authentication information (106) to a mobile device (330); receiving a request for remote authentication along with the authentication information from an unauthorized device (320) included in a remote domain (150); transmitting a query for the remote authentication to the unauthorized device (320); receiving a response to the query; and transmitting data approving authentication of the unauthorized device (320) to the unauthorized device (320).

## Description

Methods and apparatuses consistent with the present invention relate to using digital rights management (DRM) content, and more particularly, to using DRM content while roaming.

DRM technology has been introduced as a way of promoting free use of digital content while protecting copyrights of the digital content. In the related art, the DRM technology has been applied to content, but the focus of the research is gradually moving to rights objects that control consumption or use of the content.

In order to satisfy copyrights of content, use of content can be restricted, depending on to whom the rights object belongs. For example, if there is a rights object that allows a person A to use content, another person B having this rights object cannot use the content.

Hence, a rights object allowed in a domain can be used within the domain, but cannot be used in other domains. In order to use the object in another domain, a separate rights object is necessary.

However, as wireless Internet develops and the number of portable digital devices increase, the need to use mobile nodes in different domains increases. For example, when a mobile node included within domain E moves to domain F, it will be difficult for a user to use content in a device of domain F.

Also, in the case where a rights object is not allowed in units of domain, a rights object cannot be easily acquired in another device even within a range that does not infringe on the copyright of content, which is an impediment to the spread of DRM systems.

Exemplary embodiments of the present invention address at least some of the above disadvantages.

According to the present invention there is provided an apparatus and method as set forth in the appended claims. Preferred features of the invention will be apparent from the dependent claims, and the description which follows.

The present invention provides a method and apparatus for using content of a device within a domain without authority via a mobile device.

The present invention also provides a method and apparatus for temporarily using content of a device of another domain via a mobile device.

According to an aspect of the present invention, there is provided a method of using DRM content while roaming, the method comprising issuing disposable authentication information to a mobile device; receiving a request for remote authentication along with the authentication information from an unauthorized device included in a remote domain; transmitting a query for the remote authentication to the unauthorized device; receiving a response to the query; and transmitting data approving authentication of the unauthorized device to the unauthorized device.

According to another aspect of the present invention, there is provided a method of using DRM content while roaming, the method comprising issuing disposable authentication information from a device of a source domain to a mobile device; requesting remote authentication to an unauthorized device of a remote domain by using the disposable authentication information; receiving a result of approving remote authentication from the unauthorized device; and transmitting a temporary rights object to the unauthorized device.

According to another aspect of the present invention, there is provided a method of using DRM content while roaming, the method comprising receiving a message requesting remote authentication from a mobile device; transmitting a remote-authentication-requesting message, which includes a device identifier of a source domain expressed in the message, to a device of a remote domain; receiving a query for remote authentication from the device of the remote domain; transmitting a response to the query to the device of the remote domain; and receiving data of approving authentication from the device of the remote domain.

According to a another aspect of the present invention, there is provided a method of using DRM content while roaming, the method comprising receiving a message requesting remote authentication from an unauthorized device; requesting remote authentication to a first device of a source domain expressed in the message, and receiving a query for remote authentication from a second device of the remote domain; transmitting the query to the unauthorized device, and receiving a response to the query from the unauthorized device; transmitting the response to the first device of the source domain; and receiving data of approving authentication from the first device of the source domain; and transmitting the authentication-approving data to the unauthorized device.

According to an aspect of the present invention, there is provided a device comprising an authentication unit which issues disposable authentication information to a mobile device, a receiving unit which receives a request for remote authentication along with the authentication information from an unauthorized device included in a remote domain; a transmitting unit which transmits a query for authentication to the unauthorized device; and an encoding/decoding unit which encodes or decodes data transmitted and received via the transmitting unit or the receiving unit, wherein the receiving unit receives a response to the query from the unauthorized device, and the transmitting unit transmits data of approving authentication of the unauthorized device to the unauthorized device.

The above and other aspects of the present invention will become apparent by describing in detail exemplary embodiments thereof with reference to the attached drawings, in which:
Figure 1 illustrates a case where a rights object is used in a device of a source domain while roaming according to an exemplary embodiment of the present invention.
Figure 2 illustrates an order for using content of a source domain in a remote domain according to an exemplary embodiment of the present invention.
Figure 3 illustrates an execution process within a home network environment according to the exemplary embodiment of the present invention.
Figure 4 illustrates a configuration of a device according to an exemplary embodiment of the present invention.
Figure 5 is a flow chart illustrating providing a rights object while roaming in a device according to an exemplary embodiment of the present invention.
Figures 6A and 6B illustrate comparison of a related art method and a method presented by an exemplary embodiment of the present invention.

Exemplary embodiments of the present invention will be described in detail with reference to the accompanying drawings.

Aspects of the present invention and methods of accomplishing the same may be understood more readily by reference to the following detailed description of the exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

In some exemplary embodiments, the block and combinations of the blocks of the flow charts are executed by computer program instructions in the processor of a general-purpose computer, special-purpose computer or other programmable data processing equipment. Here, the instructions executed via the computers or other programmable data processing equipment generate means for executing the functions explained in the flow chart blocks. Because it is possible for the computer program instructions to be saved in computer-usable or computer-readable memories in order to implement functions in certain ways, the instructions saved in the computer-usable or computer-readable memories can produce items containing the instruction means for performing the functions explained in the flow chart blocks. However, other exemplary embodiments of the invention are constructed solely using dedicated hardware devices.

Also, each block can represent a part of a module, or a segment of code that includes one or more executable instructions for executing specific logical functions. Also, it should be noted that functions mentioned in the blocks can be executed out of order. For example, two sequential blocks can be executed at the same time, and the blocks can be executed in reverse order according to the concerned functions.

In the present specification, a remote domain refers to a domain that has not been issued a rights object.

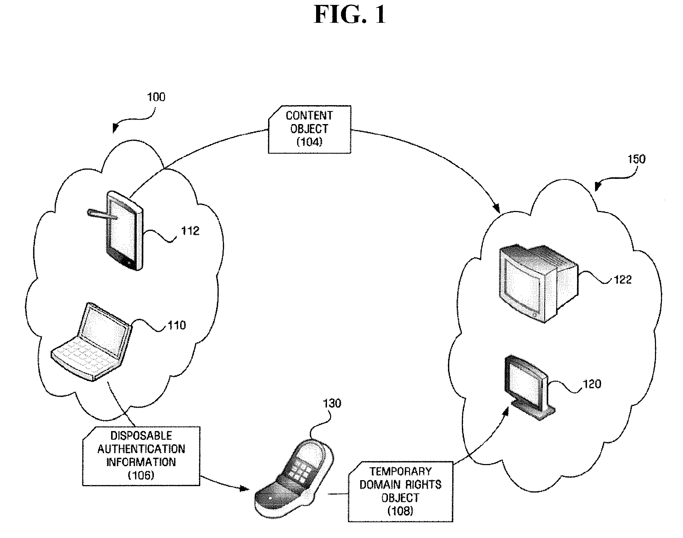

Figure 1 illustrates a case where a rights object is used in a device of a source domain while roaming according to an exemplary embodiment of the present invention.

A rights issuer encodes a rights object as a domain key, and issues the key so that DRM content can be used only in devices sharing the domain key. Figure 1 illustrates a process of authenticating a remote domain, converting a source rights object, and issuing a temporary rights object for the remote domain. In this process, there is no further intervention by an additional action or issuance of the rights issuer.

In Figure 1, source domain devices 110, 112 belong to a source domain 100, an object of content issuance, and among the devices, a representative device 110 of the source domain manages the source domain. A content object 104 stored in the source domain device is used in devices 120, 122 of a remote domain 150.

The representative device 120 of the remote domain 150 is authenticated to the representative device 110 of the source domain 100, and a mobile terminal device 130 of a source domain user is used as a medium in issuing a temporary domain rights object 108 on domain content of the source domain 100.

The source domain user stores disposable authentication information 106 issued from the representative device 110 of the source domain in the user's own mobile terminal device 130, switches to the remote domain 150, connects to the representative device 120 of the remote domain, executes authentication of the representative device 110 of the source domain by using the disposable authentication 106, receives the approval on using content of the source domain, issues a temporary domain rights object 108, transmits a content object 104, and reproduces content by spending the temporary domain rights object 108 in the remote domain device 122.

The user stores disposable authentication information in the mobile terminal device 130 in the source domain 100, then switches to the remote domain 150 and transmits the disposable authentication information 106 to the representative device 120 of the remote domain so as to reproduce the source domain content in the remote domain device 12, then the representative device 120 of the remote domain transmits the representative device 110 of the source domain 100 by telecommunications and transmits a result of authentication to the mobile terminal device 130, and issues the temporary domain rights object 108. The mobile terminal device 130 in Figure 1 can refer to a mobile device, a mobile phone, a personal data assistant (PDA), a notebook, and a memory card having a storage medium.

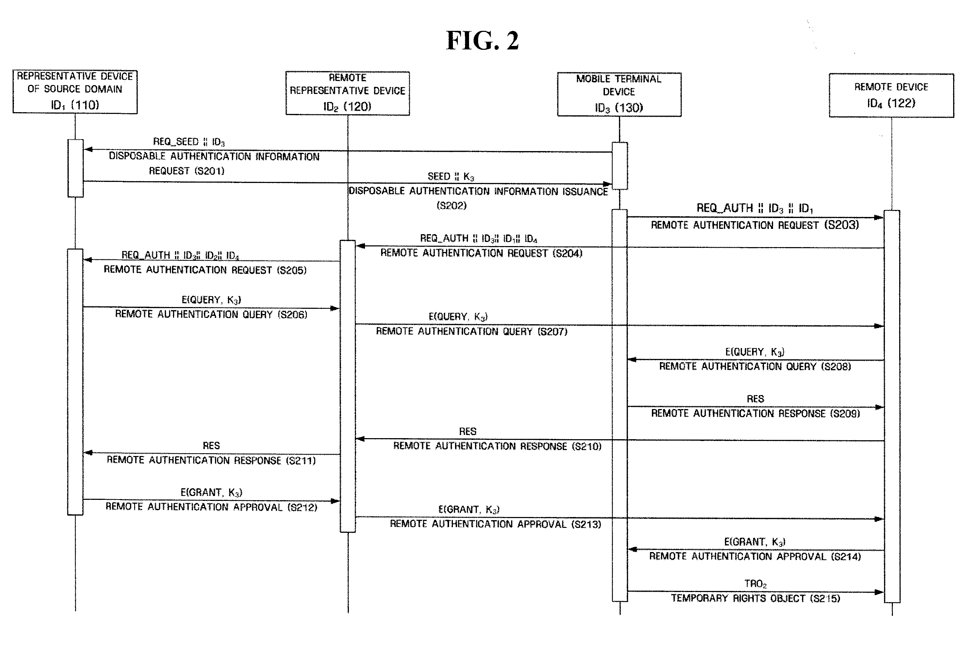

Figure 2 illustrates an order for using content of a source domain in a remote domain, according to an exemplary embodiment of the present invention. A symbol '||' in Figure 2 means adding to a message or transmitting as a parameter value.

Hereinafter, a process of using a mobile terminal device 130 as an authentication medium to reproduce a content object stored in a source device (112 in Figure 1) in a device 122 within a remote domain 150 is described. The mobile terminal device 130 transmits a disposable authentication-request message (REQ_SEED) along with the device's own identifier (ID₃) to a representative device 110 of a source domain 100 (S201). Disposable authentication information (SEED) and a secret key (K₃) are transmitted from the representative device 110 of the source domain 100 to the mobile terminal device 130 via a nearby communication medium, and the ID₃, the K₃, and the SEED are stored in the device's own storage space (S202). Here, because the nearby communication medium is used for transmission, a separate security channel may not be necessary, but a security channel can be set before the transmission depending on the situation. Further, in a nearby communication medium, wireless network communication is possible, but data also can be transmitted and received via contact as in the Universal Serial Bus (USB).

A user moves to the remote domain 150 while carrying the mobile terminal device 130, then transmits a remote authentication-request message (REQ_AUTH), its own identifier (ID₃), and an identifier (ID₁) of the representative device 110 of the source domain via the nearby communication medium (S203). The remote device 122 receives the REQ_AUTH, the ID₃, and ID₁, and adds the device's own identifier (ID₄) to the transmitted remote authentication-request message, then transmits the message to the device's own representative device 120 (S204).

The remote representative device 120 refers to the identifier (ID₁) of the representative device 110 of the source domain 100, transmitted in operation S204, and transmits the remote authentication-request message in operation S205. The representative device 110 of the source domain 100 analyzes the transmitted authentication-request message, then confirms if the ID₃ is same with an identifier stored in its own storage space, and confirms if the ID₃ is included in a device certificate revocation list as a procedure for confirmation of authentication. When the confirmation is completed, a query for authentication is encoded as a secret key (K₃) and transmitted to the remote representative device 120 (S206). Here, the query for authentication can use n as a value for the authentication query so as to compare the nth random value generated by inputting the SEED generated in operation S202 as an initial value (a seed) of a pseudo-random number function.

The remote representative device 120 transmits the encoded authentication query received from the representative device 110 of the source domain 100 to the remote device 122 in operation S207. The remote device 122 transmits the encoded authentication query received in operation S207 to the mobile terminal device 130 via a nearby communication medium (S208).

The mobile terminal device 130 acquires a value for the query by decoding the encoded authentication query by secret key (K₃) transmitted in operation S202), and outputs the query to the user. The user inputs a response value (RES) to the query. Here, the disposable authentication information SEED value received from the representative device 110 of the source domain 100 in operation 202 is input as an initial value (a seed) of a pseudo-random number function and a series of generated random values are output, and the nth random number can be input as a response value (RES) from the user. The mobile terminal device transmits a response value (RES) input by a user to a remote device 122 via near-by communication media (S209).

The remote device 122 safely transmits a user's response value (RES) received in operation S209 to the remote representative device 120(S210). And the remote representative device 120 safely transmits a user's response value (RES) received in operation S210 to the representative device 110 of the source domain 100 (S211).

If the response value transmitted in operation S211 is true, the representative device 110 of the source domain allows reproduction of a content object in the remote device 122, and encodes a remote authentication approval message (GRANT) by using K₃ as a key, then transmits the GRANT to the remote representative device 120 (S212). The remote representative device 120 transmits the encoded approval message received in operation S212 to the remote device 122 (S213).

The remote device 122 transmits an encoded approval message received in operation S213 to the mobile terminal device via the nearby communication medium (S214). The mobile terminal device 130 analyzes the approval message received in operation S214, then when the approval is confirmed, the device generates a temporary domain rights object 108 in the remote device 122, and encodes the object as a temporary secret key. Then, the mobile terminal device 130 transmits the key to the remote device 122. The temporary secret key hashes a RES so that the value is used (S215).

Furthermore, a domain rights object can be generated and transmitted along with the approval message in the representative device of the source domain 100 in operation S212. At this time, operations S214 and S215 can be omitted.

If the remote representative device 120 uses content in the process shown in Figure 2, the work performed in the remote device 122 can be performed in the remote representative device 120.

After the authentication of the remote domain 150 is established from the representative device 110 of the source domain through the process shown in Figure 2, appropriate domain devices 120 122, which belong to the remote domain 150, can be used, sharing the temporary domain rights object 108.

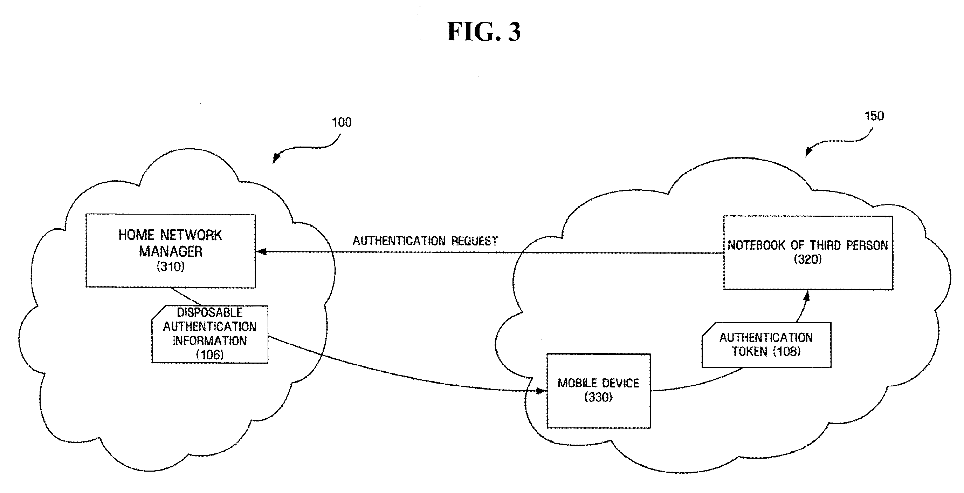

Figure 3 illustrates an execution process within a home network environment according to the exemplary embodiment of the present invention. In Figure 3, a home network manager 310 manages a source domain 100 which has a rights object as well as a function that transmits content to other devices. When a user wants the user's content in a notebook 320 of a third person, which belongs to another domain (a remote domain 150), the rights object owned by the user's home network manager 310 cannot be directly used because it is the notebook of the third person, which belongs to the remote domain 150. Hence, the home network manager 310 transmits disposable authentication information to a mobile device 330.

The mobile device 330 (a mobile terminal device) generates an authentication token 108, based on the disposable authentication information 106, and transmits the authentication token 108 to the notebook 320 of the third person existing in the remote domain 150. The third person's notebook 320 uses the authentication token 108 and requests authentication to the home network manager 310 of the source domain 100. And the notebook 320 performs an authentication process as illustrated in Figure 2, and receives a temporary domain rights object. Consequently, the user can use his or her own content in a notebook 320 of the third person, which belongs to another domain. Further, because the rights object transmitted to the notebook 320 of the third person is a temporary rights object, the convenience can be improved, not infringing on the copyright of the content. Here, a distance between the mobile device 330 and the notebook 320 of the third person is kept below a certain distance so that the home network manager 310 can perform an authentication process on the notebook 320, based on the existence of the mobile device.

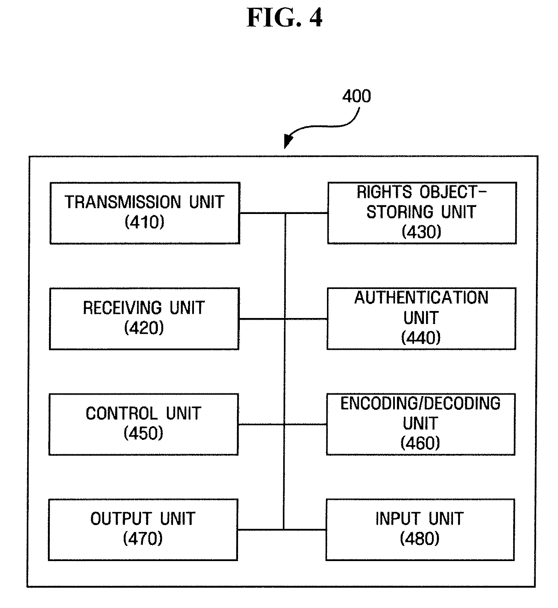

Figure 4 illustrates a configuration of a device according to an exemplary embodiment of the present invention.

In the embodiment of the present invention, the term "unit", as used herein, means, but is not limited to, a software or hardware component, such as a Field Programmable Gate Array (FPGA) or an Application Specific Integrated Circuit (ASIC), which performs certain tasks. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units. In addition, the components and units may be implemented so as to execute one or more CPUs in a device.

A configuration of a device performing a function of a home network manager which manages a source domain 100 is described in Figure 4.

The device includes a transmission unit 410, a receiving unit 420, a rights object-storing unit 430, an authentication unit 440, a control unit 450, and an encoding/decoding unit 460. The device also includes an output unit 470 and an input unit 480. The transmission unit 410 transmits a rights object to another device. Further, the transmission unit 410 also transmits information related to authentication. The receiving unit receives a rights object from a rights issuer, and receives and handles data transmitted by another device when authenticated.

The transmission unit 410 and the receiving unit 420 can be separate, or can be combined. The rights object is usually transmitted and received by physical contact or via a network.

The rights object-storing unit 430 stores a received rights object. The stored rights object can be transmitted to another device, and a temporary rights object can be generated and stored. The rights object-storing unit 430 can also store device information necessary for authentication. For example, information about a device identifier, which receives the rights object, can also be stored.

The authentication unit 440 performs an authentication process with another device. As stated above, if disposable authentication information 106 is requested in a mobile terminal device 130, the authentication unit 440 issues disposable authentication information 106, generates a query according to a remote authentication request, and approves the remote authentication. Further, if the remote authentication is successful, transmission of the rights object stored in the rights object-storing unit 430 can be requested to the control unit 450.

The control unit 450 controls components so that the components can interact. Further, the control unit 450 can control several calculation processes generated in the process of authentication such as arithmetic calculation processes that occurs when comparing authentication values or generating a query. The encoding/decoding unit 460 encodes and decodes data processed in the authentication unit 440, the transmission unit 410, or the receiving unit 420.

The output unit 470 and the input unit 480 processes an interface with a user, and shows multimedia content.

Further, the device in Figure 4 can be configured as a mobile device. At this time, the transmission unit 410 and the receiving unit 420 can be provided with a function that measures a physical distance with an unauthorized device such as a notebook of a third person.

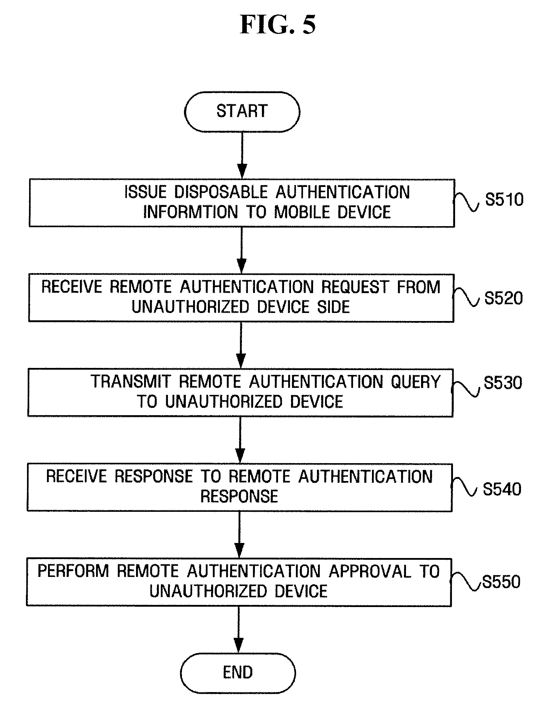

Figure 5 is a flow chart illustrating how a rights object is provided while roaming, in a device according to an exemplary embodiment of the present invention. In the present flow chart, an unauthorized device is a device to reproduce content within a remote domain, such as devices 120, 122 shown in Figures 1 and 2 or a notebook 320 of a third person shown in Figure 3.

A device which manages a home network (a representative device of a source domain) issues disposable authentication information 106 to a mobile device 330 (i.e., a mobile terminal device) (S510). While the disposable authentication information 106 is issued, information about the mobile device can be stored. If the mobile device 330, which was issued the disposable authentication information 106, requests a remote authentication on an unauthorized device, which intends to play content and belongs to the remote domain, to the unauthorized device, the unauthorized device performs the remote authentication. Hence, the device receives a remote authentication request from the unauthorized device side (S520). Here, if the device to play content within the remote domain 150 is not a representative device, such a remote authentication request is transmitted from the unauthorized device to the remote representative device, thereby being transmitted to the representative device of the source domain 100. This process is shown in operations S204 and S205 in Figure 2.

An identifier of a mobile device 330 included in the received remote authentication request is compared with information of a mobile device stored in operation S510 so as to see if the identifier and the information coincide with each other, and a remote authentication query is sent to an unauthorized device within the remote domain 150 (S530). Likewise, when a device within a remote domain transmits a query via the remote representative device, the query is transmitted via operations S206 and S207 in Figure 2.

Here, because an identifier of the mobile device is included together, authentication on the unauthorized device can be performed, whereby a remote authentication query is transmitted to the unauthorized device.

After the unauthorized device receives a response to the remote authentication query via the mobile device, the unauthorized device sends the received response to the representative device of the source domain 100. Hence, the representative device of the source domain receives a response to the remote authentication response (S540), and according to the response, the remote authentication approval is performed on the unauthorized device within the remote domain 150 (S550). And the unauthorized device informs the mobile device of the remote authentication approval, and is granted a temporary rights object, thereby using content.

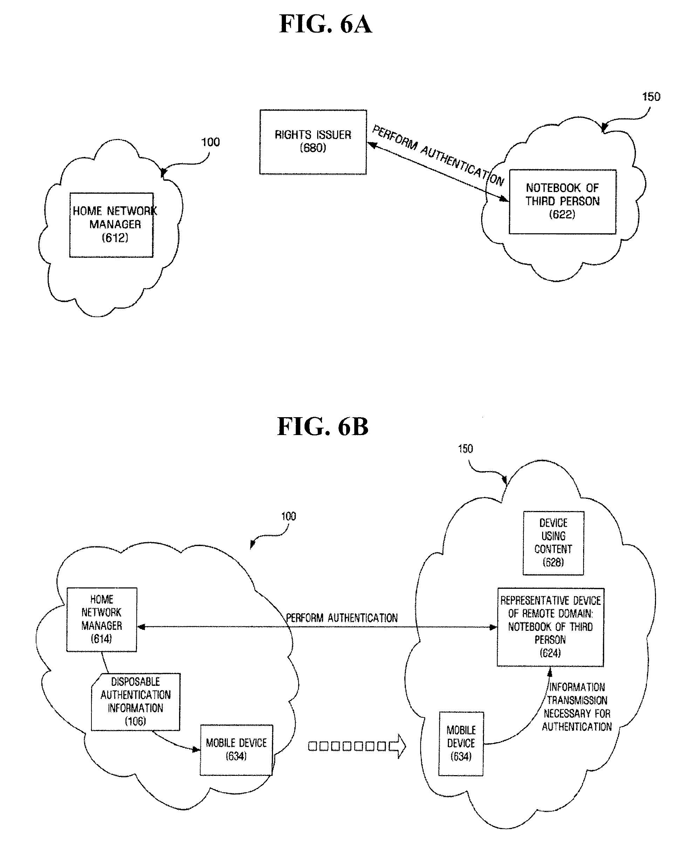

Figures 6A and 6B illustrate comparison of a related art method and a method presented by an exemplary embodiment of the present invention. In Figure 6A, in order to play content in an unauthorized device 622 of a remote domain 150, a user performs authentication from a rights issuer 680, and performs a process of receiving a rights object. Hence, there is no intervention of a home network manager 612 of a source domain 100. Instead, because there is a need for an authentication process performed by the rights issuer 680 when playing content one time, the use of the content becomes inconvenient.

On the other hand, in Figure 6B which illustrates a method according to an exemplary embodiment of the present invention, a user stores disposable authentication information 106 to a mobile device 634 that belongs to the source domain 100. And the mobile device 634 is moved so that the device comes close to a third device 624 existing within another remote domain. Here, only if the distance with the third device 624 does not exceed a certain distance, it can be defined to make roaming possible via the mobile device 634. The distance between the two devices can be measured via a wireless network or an infrared communication. The third device 624 performs authentication with a representative device of a source domain which is not a rights issuer 680, and can use content. Also, profit of a content-provider can be protected by limiting to play content temporarily. Further, if the device 624 is a representative device of a remote domain 150, other devices within the remote domain 150 can be made to use content.

The mobile device 634 in Figure 6 is not limited to communication devices such as mobile phones. The device can be a portable storage media with a built-in flash memory, a digital device that includes a storage medium such as a notebook or a PDA, or a memory card. The mobile device 634 in the present specification is an easily movable device that includes a storage unit that stores disposable authentication information.

According to another exemplary embodiment of the present invention, a user can be authenticated to use that content the user has purchased with the help of a representative source domain, which is an object of issuance, in a device that belongs to a remote domain that is not with in the domain of the object of content issuance.

According to another exemplary embodiment of the present invention, appropriate rights for playing content in a device belonging to a remote domain are granted, user convenience is improved, and the profit of the content-provider is maintained by limiting illegal distribution of the content.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of using Digital Rights Management (DRM) content while roaming, the method comprising:
issuing disposable authentication information (106) to a mobile device (330);
receiving a request for remote authentication along with the authentication information from an unauthorized device (320) included in a remote domain (150);
transmitting a query for the remote authentication to the unauthorized device (320);
receiving a response to the query; and
transmitting data approving authentication of the unauthorized device (320) to the unauthorized device (320).

2. The method of claim 1, wherein the unauthorized device (320) is a device of the source domain.

3. The method of claim 1 or 2, further comprising storing an identifier of the mobile device (330).

4. The method of claim 3, further comprising comparing the identifier stored within a message requesting the authentication and a second identifier of the mobile device (330) after the receiving the request for the remote authentication.

5. The method of any preceding claim, further comprising checking if the unauthorized device (320) is included in a device certificate revocation list.

6. The method of any preceding claim, wherein the mobile device (330) is movable and can store the disposable authentication information (106).

7. The method of any preceding claim, wherein the remote authentication query or data approving authentication of the unauthorized device (320) is encoded by a key included in the disposable authentication information (106).

8. A method of using Digital Rights Management (DRM) content while roaming, the method comprising:
issuing disposable authentication information (106) from a device of a source domain (100) to a mobile device (330);
requesting remote authentication to an unauthorized device (320) of a remote domain (150) using the disposable authentication information (106);
receiving a result approving remote authentication from the unauthorized device (320); and
transmitting a temporary rights object to the unauthorized device (320).

9. The method of claim 8, further comprising:
receiving a remote authentication query from the unauthorized device (320); and
transmitting a remote authentication response to the unauthorized device (320).

10. The method of claim 8 or 9, wherein the remote authentication query or the result approving the remote authentication is encoded as a key included in the disposable authentication information (106).

11. The method of claim 8, 9 or 10, further comprising transmitting an identifier of a mobile device (330) to the device of the source domain (100) before being issued the disposable authentication information (106).

12. The method of claim 8, 9, 10 or 11, wherein the mobile device (330) is movable and can store the disposable authentication information (106).

13. A method of using Digital Rights Management (DRM) content while roaming, the method comprising:
receiving a message requesting remote authentication from a mobile device (330);
transmitting a remote-authentication request message, which comprises a device identifier of a source domain (100) expressed in the message, to a device of a remote domain (150);
receiving a query for remote authentication from the device of the remote domain (150);
transmitting a response to the query to the device of the remote domain (150); and
receiving data approving authentication from the device of the remote domain (150).

14. The method of claim 13, further comprising:
transmitting the query to the mobile device (330) after the receiving the query for the remote authentication; and
receiving a second response to the query from the mobile device (330).

15. The method of claim 13 or 14, further comprising:
transmitting the data that approves the authentication to the mobile device (330); and
receiving a temporary rights object from the mobile device (330) after receiving the data that approves the authentication.

16. A method of using Digital Rights Management (DRM) content while roaming, the method comprising:
receiving a message requesting remote authentication from an unauthorized device (320);
sending a request for remote authentication to a first device of a source domain (100) expressed in the message, and receiving a query for remote authentication from a second device of a remote domain (150);
transmitting the query to the unauthorized device (320), and receiving a response to the query from the unauthorized device (320);
transmitting the response to the first device of the source domain (100); and
receiving data approving authentication from the first device of the source domain (100), and transmitting the authentication-approving data to the unauthorized device (320).

17. A device comprising:
an authentication unit (440) which issues disposable authentication information (106) to a mobile device (330),
a receiving unit (420) which receives a request for remote authentication along with the authentication information from an unauthorized device (320) included in a remote domain (150);
a transmitting unit (410) which transmits a query for authentication to the unauthorized device (320); and
an encoding or decoding unit (460) which encodes or decodes data transmitted and received via the transmitting unit (410) or the receiving unit (420),
wherein the receiving unit (420) receives a response to the query from the unauthorized device (320), and the transmitting unit (410) transmits data approving authentication of the unauthorized device (320) to the unauthorized device (320).

18. The device of claim 17, wherein the authentication unit (440) has a function which stores and deletes the disposable authentication information (106), and has a key that encodes the query.
